(19) Europäisches Patentamt / European Patent Office / Office européen des brevets

(11) **EP 3 979 456 B1**

(12) **EUROPEAN PATENT SPECIFICATION**

(45) Date of publication and mention
of the grant of the patent:
**01.03.2023 Bulletin 2023/09**

(21) Application number: **21199795.2**

(22) Date of filing: **29.09.2021**

(51) International Patent Classification (IPC):
*H02J 7/00* *(2006.01)* *A24F 40/50* *(2020.01)*
*A24F 40/57* *(2020.01)*

(52) Cooperative Patent Classification (CPC):
**H02J 7/0063; A24F 40/57;** A24F 40/10

(54) **POWER SUPPLY UNIT FOR AEROSOL GENERATION DEVICE**

STROMVERSORGUNGSEINHEIT FÜR AEROSOLERZEUGUNGSVORRICHTUNG

UNITÉ D'ALIMENTATION ÉLECTRIQUE POUR DISPOSITIF DE GÉNÉRATION D'AÉROSOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2020 JP 2020166308**

(43) Date of publication of application:
**06.04.2022 Bulletin 2022/14**

(73) Proprietor: **Japan Tobacco Inc.
Tokyo 105-6927 (JP)**

(72) Inventor: **Marubashi, Keiji
Tokyo, 130-8603 (JP)**

(74) Representative: **Hoffmann Eitle
Patent- und Rechtsanwälte PartmbB
Arabellastraße 30
81925 München (DE)**

(56) References cited:
**EP-A1- 3 872 952    JP-B1- 6 667 708**

EP 3 979 456 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a power supply unit for an aerosol generation device.

BACKGROUND ART

Patent Literatures 1 and 2 each describe a device capable of passing aerosol generated by heating a liquid through a flavor source so as to add a flavor to the aerosol, and allowing a user to inhale the flavored aerosol. Such a device is configured to be capable of heating a flavor source in addition to heating a liquid. Patent Literatures 3 and 4 both relate to a power supply unit for an aerosol inhaler.

Patent Literature 1: JP-T-2017-511703
Patent Literature 2: WO2019/017654
Patent Literature 3: JP 6 667708 B1
Patent Literature 4: EP 3 872 952 A1

Specifically, patent literature 3 discloses a power supply unit for an aerosol generation device through which flavored aerosol is inhaled, the power supply unit comprising a power supply configured to discharge electricity to a load that heats an aerosol source and has a correlation between a temperature and an electric resistance value, the power supply unit further comprising a circuit element that has a predetermined electric resistance value and a switching element configured to be switchable between a first state where the circuit element and the load are connected in series, the power supply unit further comprising an operational amplifier to which a voltage applied to the load in a first series circuit formed of the circuit element and the load in the first state is input, and a processing device configured to detect a temperature of the load based on output of the operational amplifier.

In a device having a plurality of objects to be heated as in the related art, it is required to appropriately manage a temperature of each of the plurality of objects to be heated, and a unit for managing the temperature is required for each object to be heated.

SUMMARY OF INVENTION

An object of the present invention is to provide an aerosol generation device capable of appropriately managing temperatures of a plurality of objects to be heated while reducing the number of units for managing the temperatures. This object is achieved by the subject-matter of claim 1. The dependent claims describe further preferred embodiments.

According to the present invention, it is possible to provide the aerosol generation device capable of appropriately managing the temperatures of the plurality of objects to be heated while reducing the number of units for managing the temperatures.

BRIEF DESCRIPTION OF DRAWINGS

Fig. 1 is a perspective view schematically showing a schematic configuration of an aerosol generation device.
Fig. 2 is another perspective view of the aerosol generation device shown in Fig. 1.
Fig. 3 is a cross-sectional view of the aerosol generation device shown in Fig. 1.
Fig. 4 is a perspective view of a power supply unit of the aerosol generation device shown in Fig. 1.
Fig. 5 shows an electrical detailed configuration example of inside of a power supply unit 10 in a state where a first cartridge 20 and a second cartridge 30 are mounted.
Fig. 6 is a flowchart for explaining an operation of the aerosol generation device shown in Fig. 1.
Fig. 7 is a flowchart for explaining the operation of the aerosol generation device shown in Fig. 1.
Fig. 8 is a timing chart for explaining the operation shown in Figs. 6 and 7.
Fig. 9 is a timing chart for explaining a first modification of an operation of an aerosol generation device 1.
Fig. 10 shows a modification of the timing chart shown in Fig. 9.
Fig. 11 is a timing chart for explaining a second modification of the operation of the aerosol generation device 1.
Fig. 12 is a schematic view showing a modification of an internal configuration of the power supply unit shown in Fig. 5.

DESCRIPTION OF EMBODIMENTS

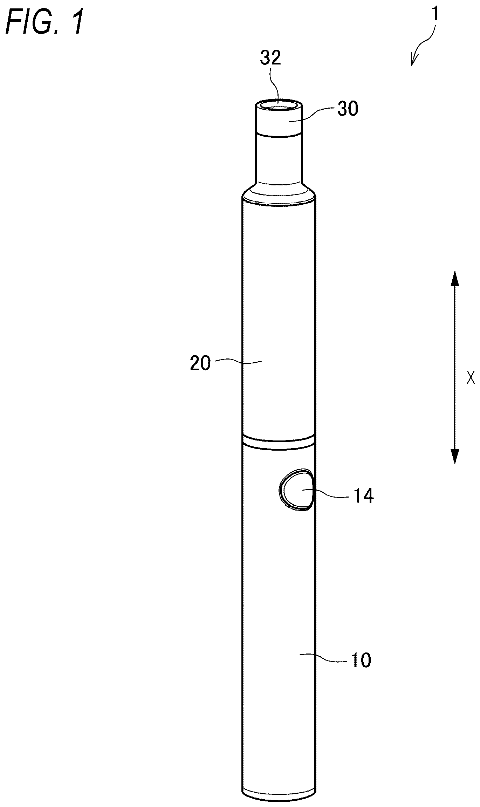

Hereinafter, an aerosol generation device 1 that is an embodiment of an aerosol generation device of the present invention will be described with reference to Figs. 1 to 5.

(Aerosol generation device)

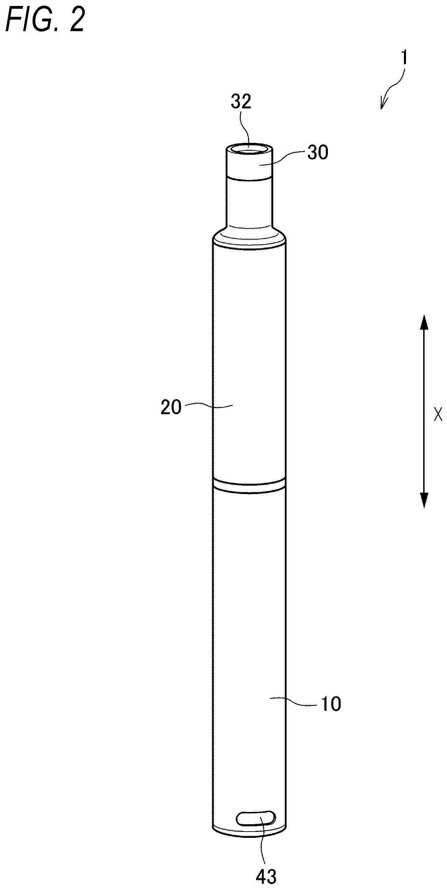

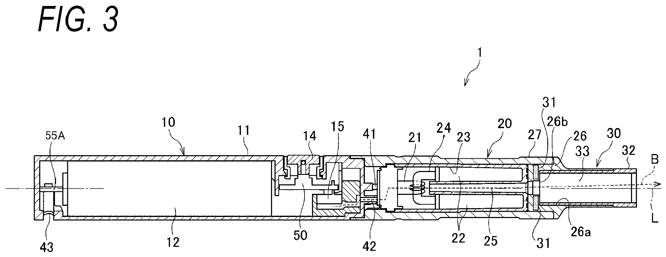

The aerosol generation device 1 is an instrument for generating aerosol to which a flavor component is added without burning and allowing the aerosol to be inhaled, and has a rod shape that extends along a predetermined direction (hereinafter referred to as a longitudinal direction X) as shown in Figs. 1 and 2. In the aerosol generation device 1, a power supply unit 10, a first cartridge 20, and a second cartridge 30 are provided in such an order along the longitudinal direction X. The first cartridge 20 is attachable to and detachable from (in other words, replaceable relative to) the power supply unit 10. The second cartridge 30 is attachable to and detachable from (in other words, replaceable relative to) the first cartridge 20. As shown in Fig. 3, the first cartridge 20 is provided with a first load 21 and a second load 31. As shown in Fig. 1, an overall shape of the aerosol generation device 1 is not limited to a shape in which the power supply unit 10, the first cartridge 20, and the second cartridge 30 are arranged in a line. As long as the first cartridge 20 and the second cartridge 30 are replaceable relative to the power supply unit 10, any shape such as a substantially box shape can be adopted.

(Power Supply Unit)

As shown in Figs. 3, 4, and 5, inside a cylindrical power supply unit case 11, the power supply unit 10 accommodates a power supply 12, a charging IC 55A, a micro controller unit (MCU) 50, an intake sensor 15, a first notification unit 45, and a second notification unit 46.

The power supply 12 is a rechargeable secondary battery, an electric double layer capacitor, or the like, and is preferably a lithium-ion secondary battery. An electrolyte of the power supply 12 may be formed of one or a combination of a gel-like electrolyte, an electrolytic solution, a solid electrolyte, and an ionic liquid.

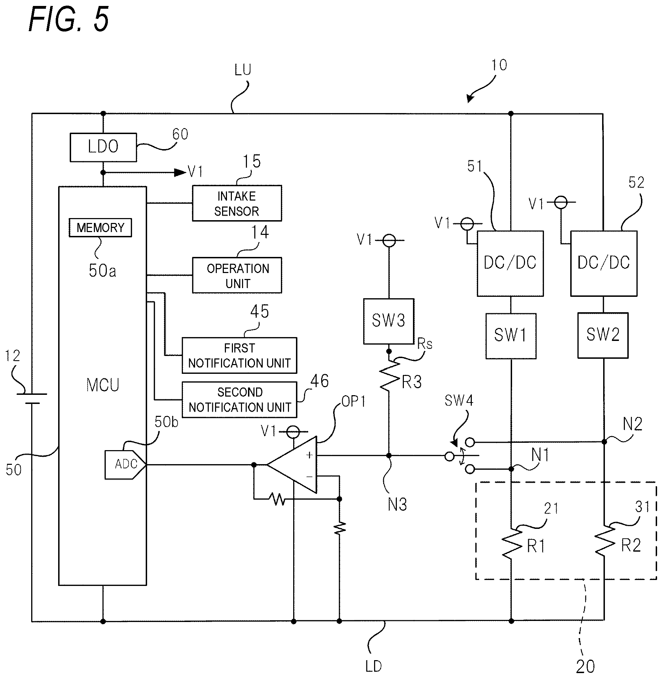

As shown in Fig. 5, the MCU 50 is connected to the intake sensor 15, an operation unit 14, the first notification unit 45, and the second notification unit 46, and performs various types of control of the aerosol generation device 1.

Specifically, the MCU 50 is mainly constituted by a processor, and further includes a memory 50a that is constituted by a storage medium such as a random access memory (RAM) necessary for an operation of the processor and a read only memory (ROM) that stores various types of information. Specifically, the processor in the present specification is an electric circuit in which circuit elements such as semiconductor elements are combined.

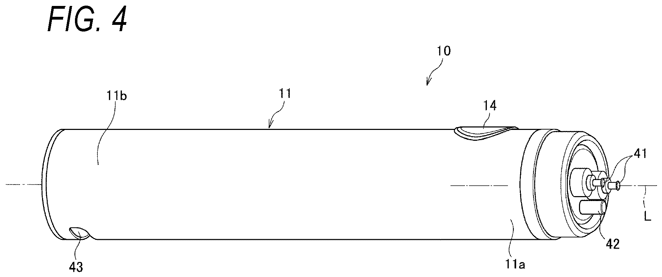

As shown in Fig. 4, a discharging terminal 41 is provided on a top portion 11a positioned on one end side (the side of the first cartridge 20) of the power supply unit case 11 in the longitudinal direction X. The discharging terminal 41 is provided so as to protrude from an upper surface of the top portion 11a toward the first cartridge 20, and is configured to be electrically connectable to each of the first load 21 and the second load 31 of the first cartridge 20.

In addition, an air supply unit 42 that supplies air to the first load 21 of the first cartridge 20 is provided in the vicinity of the discharging terminal 41 on the upper surface of the top portion 11a.

A charging terminal 43 that can be electrically connected to an external power supply (not shown) is provided in a bottom portion 11b positioned on the other end side (a side opposite to the first cartridge 20) of the power supply unit case 11 in the longitudinal direction X. The charging terminal 43 is provided in a side surface of the bottom portion 11b, and can be connected to, for example, a universal serial bus (USB) terminal, a micro USB terminal, or the like.

The charging terminal 43 may be a power reception unit that can receive power transmitted from the external power supply in a wireless manner. In such a case, the charging terminal 43 (power reception unit) may be constituted by a power reception coil. A method of wireless power transfer in this case may be an electromagnetic induction type method, a magnetic resonance type method, or a combination of the electromagnetic induction type method and the magnetic resonance type method. The charging terminal 43 may be a power reception unit that can receive power transmitted from the external power supply in a contactless manner. As another example, the charging terminal 43 can be connected to a USB terminal or a micro USB terminal, and may include the power reception unit described above.

The power supply unit case 11 is provided with the operation unit 14 that can be operated by a user on the side surface of the top portion 11a so as to face a side opposite to the charging terminal 43. The operation unit 14 is constituted by a button-type switch, a touch panel, or the like. When a predetermined activation operation is performed by the operation unit 14 in a state where the power supply unit 10 is power-off, the operation unit 14 outputs an activation command of the power supply unit 10 to the MCU 50. When the MCU 50 acquires the activation command, the MCU 50 activates the power supply unit 10.

As shown in Fig. 3, the intake sensor 15 that detects a puff (inhalation) operation is provided in the vicinity of the operation unit 14. The power supply unit case 11 is provided with an air intake port (not shown) through which outside air is taken into the power supply unit case 11. The air intake port may be provided around the operation unit 14, or may be provided around the charging terminal 43.

The intake sensor 15 is configured to output a value of a pressure (internal pressure) change in the power supply unit 10 caused by inhalation of the user through an inhalation port 32 described later. The intake sensor 15 is, for example, a pressure sensor that outputs an output value (for example, a voltage value or a current value) corresponding to internal pressure that changes in accordance with a flow rate of air inhaled from an air intake port toward the inhalation port 32. The intake sensor 15 may output an analog value, or may output a digital value converted from the analog value.

In order to compensate for pressure to be detected, the intake sensor 15 may include a temperature sensor that detects a temperature (outside air temperature) of an environment in which the power supply unit 10 is placed. The intake sensor 15 may be constituted by a condenser microphone or the like instead of a pressure sensor.

When the puff operation is performed and the output value of the intake sensor 15 is equal to or higher than an output threshold value, the MCU 50 determines that an aerosol generation request (an atomization command of an aerosol source 22 to be described later) has been made, and thereafter, when the output value of the intake sensor 15 falls below the output threshold value, the MCU 50 determines that the aerosol generation request has ended. In the aerosol generation device 1, for a purpose of preventing overheating of the first load 21 or the like, when a period during which the aerosol generation request is made reaches an upper limit value tupper (for example, 2.4 seconds), it is determined that the aerosol generation request has ended regardless of the output value of the intake sensor 15.

Instead of the intake sensor 15, the aerosol generation request may be detected based on an operation of the operation unit 14. For example, when the user performs a predetermined operation on the operation unit 14 in order to start inhaling aerosol, the operation unit 14 may output a signal indicating the aerosol generation request to the MCU 50.

The charging IC 55A is disposed close to the charging terminal 43, and controls charging of power input from the charging terminal 43 to the power supply 12. The charging IC 55A may be disposed in the vicinity of the MCU 50.

(First Cartridge)

As shown in Fig. 3, inside a cylindrical cartridge case 27, the first cartridge 20 includes a reservoir 23 constituting a storage portion that stores the aerosol source 22, the first load 21 constituting an atomizer that atomizes the aerosol source 22 so as to generate aerosol, a wick 24 that draws the aerosol source 22 from the reservoir 23 to a position of the first load 21, an aerosol flow path 25 constituting a cooling passage that sets a particle size of the aerosol generated by atomization of the aerosol source 22 to a size suitable for inhalation, an end cap 26 that accommodates a part of the second cartridge 30, and the second load 31 that is provided in the end cap 26 and configured to heat the second cartridge 30.

The reservoir 23 is partitioned to surround a periphery of the aerosol flow path 25, and stores the aerosol source 22. A porous body, such as a resin web or cotton, may be accommodated in the reservoir 23, and the aerosol source 22 may be impregnated in the porous body. The reservoir 23 may only store the aerosol source 22 without accommodating the porous body such as the resin web or cotton. The aerosol source 22 includes a liquid such as glycerin, propylene glycol or water.

The wick 24 is a liquid holding member that draws the aerosol source 22 from the reservoir 23 to the position of the first load 21 by using a capillary phenomenon. The wick 24 constitutes a holding portion that holds the aerosol source 22 supplied from the reservoir 23 at a position where the aerosol source 22 can be atomized by the first load 21. The wick 24 is formed of, for example, glass fiber or porous ceramic.

The first load 21 atomizes the aerosol source 22 by heating the aerosol source 22 without burning by power supplied from the power supply 12 via the discharging terminal 41. In principle, as the power supplied from the power supply 12 to the first load 21 increases, an amount of the atomized aerosol source increases. The first load 21 is constituted by an electric heating wire (coil) wound at a predetermined pitch.

The first load 21 may be any element that can generate aerosol by heating the aerosol source 22 and atomizing the aerosol source 22. The first load 21 is, for example, a heat generating element. Examples of the heat generating element include a heat generating resistor, a ceramic heater, an induction heating type heater, and the like.

As the first load 21, a load in which a temperature and an electric resistance value have a correlation is used. As the first load 21, for example, a load having positive temperature coefficient (PTC) characteristics in which an electric resistance value increases as a temperature increases is used.

The aerosol flow path 25 is downstream of the first load 21 and is provided on a center line L of the power supply unit 10. The end cap 26 includes: a cartridge accommodating portion 26a that accommodates a part of the second cartridge 30; and a communication path 26b that communicates the aerosol flow path 25 and the cartridge accommodating portion 26a.

The second load 31 is embedded in the cartridge accommodating portion 26a. The second load 31 heats the second cartridge 30 (more specifically, the flavor source 33 included in the second cartridge 30) accommodated in the cartridge accommodating portion 26a by the power supplied from the power source 12 via the discharging terminal 41. The second load 31 is constituted by, for example, an electric heating wire (coil) wound at a predetermined pitch.

The second load 31 may be any element that can heat the second cartridge 30. The second load 31 is, for example, a heat generating element. Examples of the heat generating element include a heat generating resistor, a ceramic heater, an induction heating type heater, and the like. As the second load 31, a load in which a temperature and an electric resistance value have a correlation is used. As the second load 31, for example, a load having PTC characteristics is used.

(Second Cartridge)

The second cartridge 30 stores the flavor source 33. When the second cartridge 30 is heated by the second load 31, the flavor source 33 is heated. The second cartridge 30 is detachably accommodated in the cartridge accommodating portion 26a provided in the end cap 26 of the first cartridge 20. An end portion, which is located on a side opposite to the side of the first cartridge 20, of the second cartridge 30 serves as the user inhalation port 32. The inhalation port 32 is not limited to be formed integrally with the second cartridge 30, and may also be detachable from the second cartridge 30. By forming the inhalation port 32 separately from the power supply unit 10 and the first cartridge 20 in this way, the inhalation port 32 can be kept hygienic.

The second cartridge 30 adds a flavor component to the aerosol by passing the aerosol generated by atomizing the aerosol source 22 by the first load 21 through the flavor source 33. Chopped tobacco or a molded body obtained by molding a tobacco raw material into particles can be used as a raw material piece that constitutes the flavor source 33. The flavor source 33 may also be constituted by a plant other than tobacco (for example, mint, Chinese herb, herb, or the like). A fragrance such as menthol may also be added to the flavor source 33.

In the aerosol generation device 1, the aerosol source 22 and the flavor source 33 can generate aerosol to which a flavor component is added. That is, the aerosol source 22 and the flavor source 33 constitute an aerosol generation source that generates the aerosol.

The aerosol generation source of the aerosol generation device 1 is a portion that is replaced and used by the user. The portion is provided to the user, for example, as a set of one first cartridge 20 and one or a plurality of (for example, five) second cartridges 30. The first cartridge 20 and the second cartridge 30 may be integrated into one cartridge.

In the aerosol generation device 1 configured as described above, as indicated by an arrow B in Fig. 3, air that flows in from the air intake port (not shown) provided in the power supply unit case 11 passes through the vicinity of the first load 21 of the first cartridge 20 from the air supply unit 42. The first load 21 atomizes the aerosol source 22 drawn from the reservoir 23 by the wick 24. Aerosol generated by atomization flows through the aerosol flow path 25 together with the air that flows in from the intake port, and is supplied to the second cartridge 30 via the communication path 26b. The aerosol supplied to the second cartridge 30 is passed through the flavor source 33 so as to add a flavor component thereto, and is supplied to the inhalation port 32.

The aerosol generation device 1 is also provided with the first notification unit 45 and the second notification unit 46 that notify the user of various types of information (see Fig. 5). The first notification unit 45 is configured to perform notification that acts on a tactile sense of the user, and is constituted by a vibrating element such as a vibrator. The second notification unit 46 is configured to perform notification that acts on a visual sense of the user, and is constituted by a light-emitting element such as a light emitting diode (LED). As the notification unit that notifies various types of information, a sound output element may be further provided to perform notification that acts on an auditory sense of the user. The first notification unit 45 and the second notification unit 46 may be provided in any of the power supply unit 10, the first cartridge 20, and the second cartridge 30, and are preferably provided in the power supply unit 10. For example, a configuration in which a periphery of the operation unit 14 is light-transmissive and light is emitted by a light-emitting element such as an LED is employed.

(Details of Power Supply Unit)

Fig. 5 shows an electrical detailed configuration example of inside of the power supply unit 10 in a state where the first cartridge 20 and the second cartridge 30 are mounted. As shown in Fig. 5, the power supply unit 10 includes the power supply 12, the MCU 50, a low drop out (LDO) regulator 60, a DC/DC converter 51, a DC/DC converter 52, a switch SW1, a switch SW2, a switch SW3, a switching element SW4, an operational amplifier OP 1, an analog-to-digital converter (hereinafter referred to as ADC) 50b, and a resistance element Rs.

The resistance element described in the present specification may be an element having a fixed electric resistance value, and is, for example, a resistor, a diode, or a transistor. In the example shown in Fig. 5, the resistance element Rs is a resistor.

The switch described in the present specification is a switching element such as a transistor that switches between disconnection and conduction of a wiring path. In the example shown in Fig. 5, each of the switches SW1 to SW3 is a transistor.

The LDO regulator 60 is connected to a main positive bus LU connected to a positive electrode of the power supply 12. The MCU 50 is connected to the LDO regulator 60 and a main negative bus LD connected to a negative electrode of the power supply 12. The MCU 50 is also connected to each of the switches SW1 to SW3 and the switching element SW4, and controls the same. The LDO regulator 60 steps down a voltage from the power supply 12 and outputs the stepped-down voltage. An output voltage V1 of the LDO regulator 60 is also used as an operation voltage of each of the MCU 50, the DC/DC converter 51, the DC/DC converter 52, and the operational amplifier OP1.

The DC/DC converter 51 is connected to the main positive bus LU. The first load 21 is connected to the main negative bus LD. The switch SW1 is connected between the DC/DC converter 51 and the first load 21. Hereinafter, an electric resistance value of the first load 21 is referred to as R1.

The DC/DC converter 52 is connected to the main positive bus LU. The second load 31 is connected to the main negative bus LD. The switch SW2 is connected between the DC/DC converter 52 and the second load 31. Hereinafter, an electric resistance value of the second load 31 is referred to as R2.

A series circuit formed of the DC/DC converter 51, the switch SW1, and the first load 21 and a series circuit formed of the DC/DC converter 52, the switch SW2, and the second load 31 are connected in parallel to the power supply 12.

The switching element SW4 is an element that selectively switches between two conduction paths. The switching element SW4 includes a first contact that is connected to a connection node N1 between the switch SW1 and the first load 21, a second contact that is connected to a connection node N2 between the switch SW2 and the second load 31, and a third contact that is connected to a non-inverting input terminal of the operational amplifier OP1. The switching element SW4 switches between a state where the first contact and the third contact are electrically connected and a state where the second contact and the third contact are electrically connected. The switching element SW4 may be a mechanical switch, or may be constituted by a first switch connected between the non-inverting input terminal of the operational amplifier OP1 and the connection node N1, and a second switch connected between the non-inverting input terminal of the operational amplifier OP1 and the connection node N2.

The inverting input terminal of the operational amplifier OP1 is connected to each of an output terminal of the operational amplifier OP1 and the main negative bus LD via a resistance element. A positive power supply terminal of the operational amplifier OP1 is connected to a power supply line that supplies the output voltage V1 of the LDO regulator 60. A negative power supply terminal of the operational amplifier OP1 is connected to the main negative bus LD. Therefore, a range of a differential input voltage that can be amplified by the operational amplifier OP1 is a range from 0V to the output voltage V1.

The ADC 50b is connected to the output terminal of the operational amplifier OP1. The ADC 50b may be provided outside the MCU 50.

The resistance element Rs is connected to a connection node N3 between the operational amplifier OP1 and the switching element SW4. Hereinafter, an electric resistance value of the resistance element Rs is referred to as R3.

The switch SW3 is connected between the power supply line that supplies the output voltage V1 of the LDO regulator 60 and the resistance element Rs.

The processor of the MCU 50 is configured to be capable of acquiring a temperature of the second load 31. The temperature of the second load 31 does not exactly coincide with the temperature of the flavor source 33 heated by the second load 31, and can be regarded as substantially the same as the temperature of the flavor source 33. The processor of the MCU 50 is configured to be capable of acquiring a temperature of the first load 21. The temperature of the first load 21 can be used to prevent overheating of the first load 21 or the aerosol source 22, and to precisely control an amount of the aerosol source 22 atomized by the first load 21.

(MCU)

Next, a function of the MCU 50 will be described. The MCU 50 includes a temperature detection unit, a power control unit, and a notification control unit as functional blocks implemented by executing programs stored in a ROM by the processor

The temperature detection unit acquires the temperature of the first load 21 and the temperature of the second load 31 based on output of the ADC 50b.

The temperature detection unit forms a first state by controlling the switching element SW4 to connect the connection node N3 and the connection node N1, controlling the switch SW3 to be in a conductive state, and controlling the switch SW1 to be in a cut-off state. The first state is a state where the power supply line that supplies the output voltage V1 and the main negative bus LD are connected by the first series circuit formed of the resistance element Rs and the first load 21. In the first state, the temperature detection unit acquires an output value of the ADC 50b (value of a voltage applied to the first load 21), and acquires the temperature of the first load 21 based on the output value. Specifically, the output value corresponds to a value obtained by amplifying, by the operational amplifier OP1 with a predetermined amplification factor, the differential input voltage of the operational amplifier OP1 represented by $\{R1 / (R3 + R1)\} \times V1$. As described above, since the first load 21 is specified to have a correlation between the temperature and the electric resistance value, the electric resistance value of the first load 21 can be derived based on the output value of the ADC 50b in the first state, and the temperature of the first load 21 can be acquired based on the electric resistance value.

The temperature detection unit forms a second state by controlling the switching element SW4 to connect the connection node N3 and the connection node N2, controlling the switch SW3 to be in a conductive state, and controlling the switch SW2 to be in a cut-off state. The second state is a state where the power supply line that supplies the output voltage V1 and the main negative bus LD are connected by the second series circuit formed of the resistance element Rs and the second load 31. In the second state, the temperature detection unit acquires an output value of the ADC 50b (value of a voltage applied to the second load 31), and acquires the temperature of the second load 31 based on the output value. Specifically, the output value corresponds to a value obtained by amplifying, by the operational amplifier OP1 with a predetermined amplification factor, the differential input voltage of the operational amplifier OP1 represented by $\{R2 / (R3 + R2)\} \times V1$. As described above, since the second load 31 is specified to have a correlation between the temperature and the electric resistance value, the electric resistance value of the second load 31 can be derived based on the output value of the ADC 50b in the second state, and the temperature of the second load 31 can be acquired based on the electric resistance value.

The notification control unit controls the first notification unit 45 and the second notification unit 46 to notify various types of information. For example, in response to detection of replacement timing of the second cartridge 30, the notification control unit controls at least one of the first notification unit 45 and the second notification unit 46 to perform a notification that prompts replacement of the second cartridge 30. The notification control unit is not limited to cause the notification that prompts the replacement of the second cartridge 30 to be performed, and may also cause a notification that prompts replacement of the first cartridge 20, a notification that prompts replacement of the power supply 12, a notification that prompts charging of the power supply 12, and the like to be performed.

The power control unit controls discharging from the power supply 12 to the first load 21 and the second load 31 (discharging necessary for heating the load) in response to a signal indicating the aerosol generation request output from the intake sensor 15. That is, the power control unit performs first discharging from the power supply 12 to the first load 21 in order to atomize the aerosol source 22, and second discharging from the power supply 12 to the second load 31 in order to heat the flavor source 33.

Accordingly, in the aerosol generation device 1, the flavor source 33 can be heated by discharging to the second load 31. In order to increase an amount of the flavor component added to the aerosol, it is experimentally known that it is effective to increase the temperature of the flavor source 33.

A weight [mg] of aerosol that is generated in the first cartridge 20 and passes through the flavor source 33 due to one inhalation operation of the user is referred to as an aerosol weight $W_{aerosol}$. Power required to be supplied to the first load 21 for generating the aerosol is referred to as atomization power $P_{liquid}$. A time during which the atomization power $P_{liquid}$ is supplied to the first load 21 for generating the aerosol is referred to as a supply time $t_{sense}$. An upper limit per inhalation of the supply time $t_{sense}$ is the above-described upper limit value $t_{upper}$. A weight [mg] of a flavor component contained in the flavor source 33 is referred to as a flavor component remaining amount $W_{capsule}$. Information on the temperature of the flavor source 33 is referred to as a temperature parameter $T_{capsule}$. A weight [mg] of a flavor component added to the aerosol that passes through the flavor source 33 due to one inhalation operation of the user is referred to as a flavor component amount $W_{flavor}$ The information on the temperature of the flavor source 33 is the temperature of the second load 31.

It is experimentally found that the flavor component amount $W_{flavor}$ depends on the flavor component remaining amount $W_{capsule}$, the temperature parameter $T_{capsule}$, and the aerosol weight $W_{aerosol}$. Therefore, the flavor component amount $W_{flavor}$ can be modeled by the following Equation (1).

$$W_{flavor} = \beta \times (W_{capsule} \times T_{capsule}) \times \gamma \times W_{aerosol} \ (1)$$

The $\beta$ in Equation (1) is a coefficient indicating a ratio of how much of the flavor component contained in the flavor source 33 is added to aerosol during one inhalation, and is experimentally obtained. The $\gamma$ in Equation (1) is a coefficient obtained experimentally. Although the temperature parameter $T_{capsule}$ and the flavor component remaining amount $W_{capsule}$ may fluctuate during a period in which one inhalation is performed, the $\gamma$ is introduced in the model so as to handle the temperature parameter $T_{capsule}$ and the flavor component remaining amount $W_{capsule}$ as constant values.

The flavor component remaining amount $W_{capsule}$ is decreased every time the inhalation is performed. Therefore, the flavor component remaining amount $W_{capsule}$ is inversely proportional to the number of times of inhalation, which is the number of times when the inhalation is performed. In other words, the number of times of inhalation is the cumulative number of times of discharging operations to the first load 21 for aerosol generation in response to the aerosol generation request. In addition, the flavor component remaining amount $W_{capsule}$ decreases more as a time during which discharging to the first load 21 is performed for the aerosol generation in response to the inhalation becomes longer. Therefore, the flavor component remaining amount $W_{capsule}$ is also inversely proportional to a cumulative value of the time during which the discharging to the first load 21 is performed for the aerosol generation in response to the inhalation (hereinafter, referred to as a cumulative discharging time).

As can be seen from the model of Equation (1), when it is assumed that the aerosol weight $W_{aerosol}$ per inhalation is controlled to be substantially constant, it is necessary to increase the temperature of the flavor source 33 in accordance with a decrease in the flavor component remaining amount $W_{capsule}$ (increase in the number of times of inhalation or the cumulative discharging time) in order to stabilize the flavor component amount $W_{flavor}$

Therefore, the power control unit of the MCU 50 increases a target temperature of the flavor source 33 (target temperature $T_{cap\_target}$ described below) based on the number of times of inhalation or the cumulative discharging time. Then, the power control unit of the MCU 50 controls discharging from the power supply 12 to the second load 31 for heating the flavor source 33 such that the temperature of the second load 31 ($\approx$ the temperature of the flavor source 33) converges to the target temperature. Accordingly, it is possible to increase and stabilize the flavor component amount $W_{flavor}$ Specifically, the power control unit of the MCU 50 manages the target temperature in accordance with a table stored in advance in the memory 50a. The table stores the number of times of inhalation or the cumulative discharging time in association with the target temperature of the flavor source 33.

(Operation of Aerosol generation device)

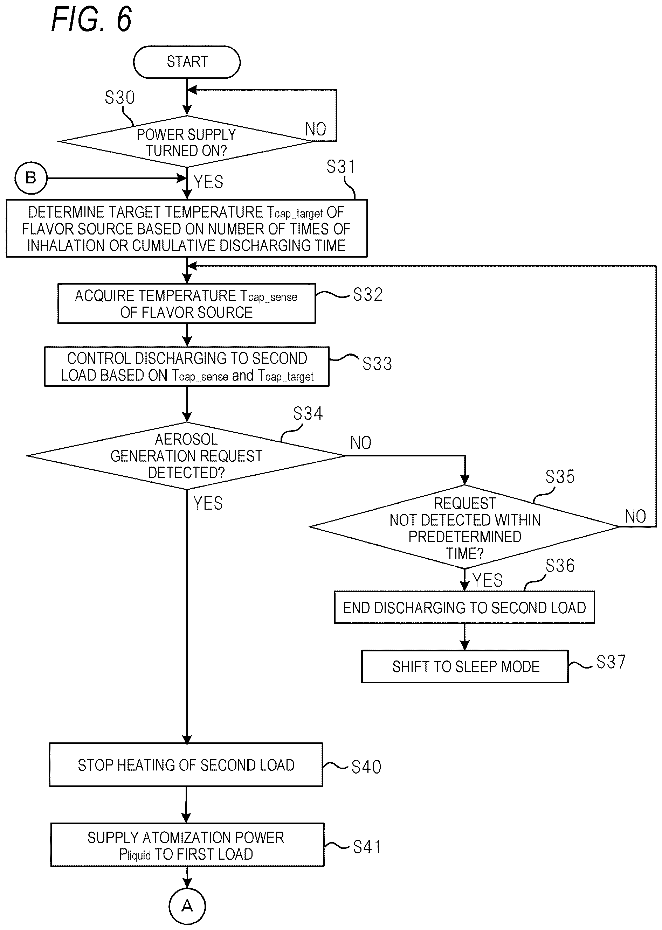

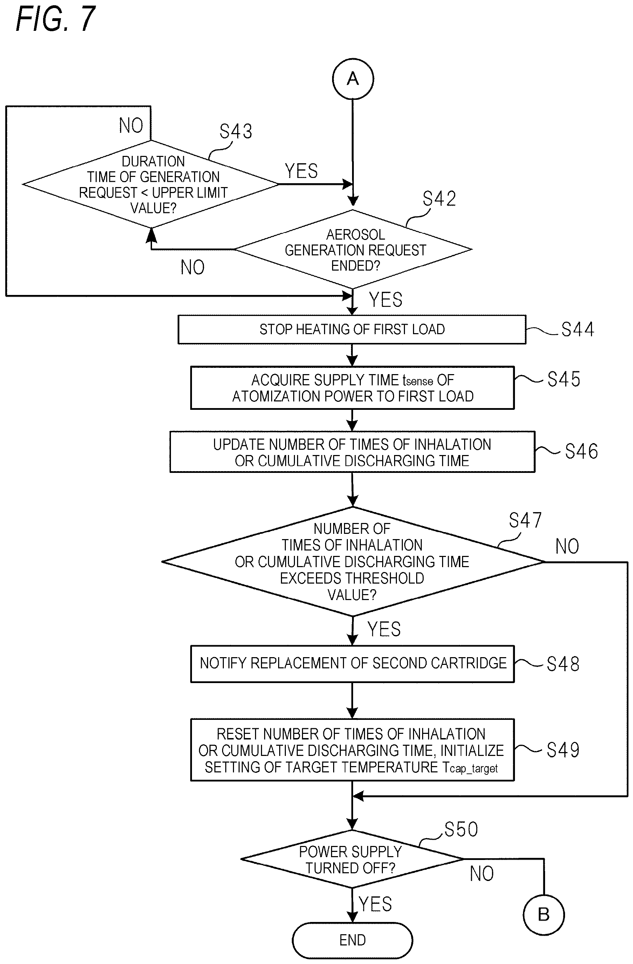

Figs. 6 and 7 are flowcharts for explaining an operation of the aerosol generation device 1 shown in Fig. 1. When the power supply of the aerosol generation device 1 is turned on by an operation of the operation unit 14 or the like (step S30: YES), the MCU 50 determines (sets) the target temperature $T_{cap\_target}$ of the flavor source 33 based on the number of times of inhalation or the cumulative discharging time stored in the memory 50a (step S31).

Next, the MCU 50 acquires the current temperature of the second load 31 as a current temperature $T_{cap\_sense}$ of the flavor source 33 (step S32).

The MCU 50 controls discharging to the second load 31 for heating the flavor source 33 based on the temperature $T_{cap\_sense}$ and the target temperature $T_{cap\_target}$ (step S33). Specifically, the MCU 50 supplies power to the second load 31 by proportional-integral-differential (PID) control or ON/OFF control such that the temperature $T_{cap\_sense}$ converges to the target temperature $T_{cap\_target}$.

In the PID control, a difference between the temperature $T_{cap\_sense}$ and the target temperature $T_{cap\_target}$ is fed back, and power control is performed based on a feedback result thereof such that the temperature $T_{cap\_sense}$ converges to the target temperature $T_{cap\_target}$. According to the PID control, the temperature $T_{cap\_sense}$ can converge to the target temperature $T_{cap\_target}$ with high accuracy. The MCU 50 may also use proportional (P) control or proportional-integral (PI) control instead of the PID control.

The ON/OFF control is control in which power is supplied to the second load 31 in a state where the temperature $T_{cap\_sense}$ is lower than the target temperature $T_{cap\_target}$, and the power supply to the second load 31 is stopped until the temperature $T_{cap\_sense}$ becomes lower than the target temperature $T_{cap\_target}$ in a state where the temperature $T_{cap\_sense}$ is equal to or higher than the target temperature $T_{cap\_target}$. According to the ON/OFF control, the temperature of the flavor source 33 can be increased faster than the PID control. Therefore, it is possible to increase a possibility that the temperature $T_{cap\_sense}$ reaches the target temperature $T_{cap\_target}$ at a stage before an aerosol generation request described later is detected.

After step S33, the MCU 50 determines presence or absence of the aerosol generation request (step S34). When the aerosol generation request is not detected (step S34: NO), the MCU 50 determines a length of a time during which the aerosol generation request is not made (hereinafter, referred to as a non-operation time) in step S35. When the non-operation time reaches a predetermined time (step S35: YES), the MCU 50 ends discharging to the second load 31 (step S36), and performs shifting to a sleep mode in which power consumption is reduced (step S37). When the non-operation time is less than the predetermined time (step S35: NO), the MCU 50 shifts the process to step S32.

When the aerosol generation request is detected (step S34: YES), the MCU 50 stops heating of the second load 31 (step S40). After step S40, the MCU 50 supplies the predetermined atomization power $P_{liquid}$ to the first load 21 to heat the first load 21 (heat for atomizing the aerosol source 22), and starts aerosol generation (step S41).

After the heating of the first load 21 is started in step S41, when the aerosol generation request is ended (step S42: NO), and if a duration time of the aerosol generation request is less than the upper limit value $t_{upper}$ (step S43: YES), the MCU 50 continues the heating of the first load 21. When the duration time of the aerosol generation request reaches the upper limit value $t_{upper}$ (step S43: NO) and when the aerosol generation request is ended (step S42: YES), the MCU 50 stops the power supply to the first load 21 (step S44).

After step S44, the MCU 50 acquires the supply time $t_{sence}$ of the atomization power $P_{liquid}$ supplied to the first load 21 during the heating of the first load 21 started in step S41 (step S45). Then, the MCU 50 updates the number of times of inhalation or the cumulative discharging time stored in the memory 50a (step S46).

The cumulative discharging time is updated by adding the supply time $t_{sence}$ acquired in step S45 to a cumulative value of the supply time $t_{sence}$ until an inhalation last time. The number of times of inhalation is updated by advancing a counter value of a counter incorporated in the MCU 50 by one.

Next, the MCU 50 determines whether the updated number of times of inhalation or the updated cumulative discharging time exceeds a threshold value (step S47). When the updated number of times of inhalation or the updated cumulative discharging time is equal to or lower than the threshold value (step S47: NO), the MCU 50 shifts the process to step S50.

When the updated number of times of inhalation or the updated cumulative discharging time exceeds the threshold value (step S47: YES), the MCU 50 causes the first notification unit 45 and the second notification unit 46 to perform notification that prompts replacement of the second cartridge 30 (step S48). Then, the MCU 50 resets the number of times of inhalation or the cumulative discharging time of the memory 50a to an initial value (= 0), and initializes the target temperature $T_{cap\_target}$ (step S49). The initialization of the target temperature $T_{cap\_target}$ means that the target temperature $T_{cap\_target}$ stored in the memory 50a at that time point is excluded from a set value.

After step S49, if the power supply is not turned off (step S50: NO), the MCU 50 returns the process to step S31, and if the power supply is turned off (step S50: YES), the MCU 50 ends the process.

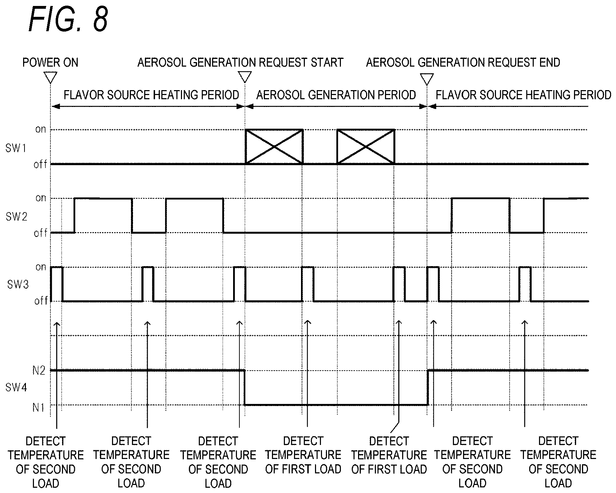

Fig. 8 is a timing chart for explaining the operation shown in Figs. 6 and 7. In Fig. 8, "SW1" to "SW3" indicate operation states of the switches SW1 to SW3. "on" indicates a conductive state, and "off" indicates a cut-off state. "SW4" in Fig. 8 indicates an operation state of the switching element SW4. "N1" indicates a state where the connection node N3 and the connection node N1 are connected to each other, and "N2" indicates a state where the connection node N3 and the connection node N2 are connected to each other.

When the power supply unit 10 is activated ("power ON" in the drawing), the connection node N3 and the connection node N2 are connected by the switching element SW4 in a state where both the switch SW1 and the switch SW2 are turned off. In this state, the switch SW3 is turned on, a voltage applied to the second load 31 is input to the operational amplifier OP1, and a temperature of the second load 31 is detected based on output of the ADC 50b.

After the temperature of the second load 31 is detected, the switch SW3 is turned off, then the switch SW2 is turned on, and heating of the second load 31 is started so as to converge the flavor source 33 to the target temperature. When a predetermined first control period elapses since the start of the heating of the second load 31, the switch SW2 is turned off, and the switch SW3 is turned on during a period when the switch SW2 is turned off. As a result, the voltage applied to the second load 31 is input to the operational amplifier OP 1, and the temperature of the second load 31 is detected based on the output of the ADC 50b. After the temperature of the second load 31 is detected, the switch SW3 is turned off, then the switch SW2 is turned on, and heating of the second load 31 is started so as to converge the flavor source 33 to the target temperature. In a flavor source heating period until the aerosol generation request is detected, the above operation is repeated.

When the aerosol generation request is issued ("aerosol generation request start" in the drawing), the switch SW2 and the switch SW3 are turned off, and the connection node N3 and the connection node N1 are connected by the switching element SW4. In this state, control of the switch SW1 is started, and the first load 21 is heated for aerosol generation. When a predetermined second control period elapses since the start of the heating of the first load 21, the switch SW1 is turned off, and the switch SW3 is turned on during a period when the switch SW1 is turned off. As a result, the voltage applied to the first load 21 is input to the operational amplifier OP1, and the temperature of the first load 21 is detected based on the output of the ADC 50b. After the temperature of the first load 21 is detected, the switch SW3 is turned off, then the control of the switch SW1 is resumed, and the first load 21 is heated for aerosol generation. During an aerosol generation period from a start of the aerosol generation request to an end of the aerosol generation request, the above operation is repeated. Then, when the aerosol generation request is ended, the same operation as the above-described flavor source heating period is performed.

(Effect of Embodiment)

As described above, according to the aerosol generation device 1, the amount of the flavor component added to the aerosol can be stabilized at a high value, and thus commercial value thereof can be increased. In addition, according to the aerosol generation device 1, the temperature of the first load 21 and the temperature of the second load 31 can be detected by the single operational amplifier OP1. Therefore, for example, as compared with a configuration in which an operational amplifier for detecting the temperature of the first load 21 and an operational amplifier for detecting the temperature of the second load 31 are provided, a circuit area of the power supply unit 10 can be reduced, and downsizing, cost reduction, and power consumption reduction can be achieved.

According to the aerosol generation device 1, a resistance element necessary for detecting the temperature of the first load 21 and a resistance element necessary for detecting the temperature of the second load 31 are constituted by the common resistance element Rs. Therefore, as compared with a configuration in which resistance elements for temperature detection are separately provided for the first load 21 and the second load 31, the circuit area of the power supply unit 10 can be reduced, and downsizing and cost reduction can be achieved. In addition, for example, when characteristics of the first load 21 and the second load 31 (change in the electric resistance value relative to a temperature change) are the same, calculation can be shared by the temperature detection of the first load 21 and the temperature detection of the second load 31, and thus a program can be simplified.

According to the aerosol generation device 1, the differential input voltage of the operational amplifier OP1 at the time of detecting the temperature of the first load 21 is $\{R1 / (R3 + R1)\} \times V1$, which is less than the power supply voltage of the operational amplifier OP1. Similarly, the differential input voltage of the operational amplifier OP1 at the time of detecting the temperature of the second load 31 is $\{R2 / (R3 + R2)\} \times VI$, which is less than the power supply voltage of the operational amplifier OP1. As a result, an output range of the operational amplifier OP1 can be fully utilized, and temperature detection accuracy of the first load 21 and the second load 31 can be improved.

(First Modification of Operation of Aerosol generation device)

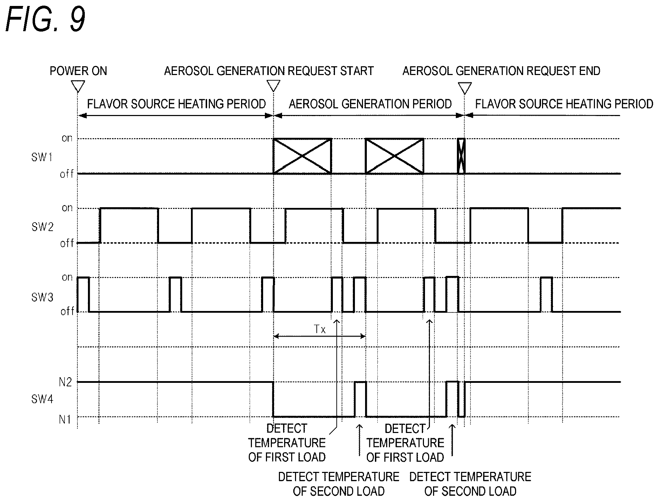

Fig. 9 is a timing chart for explaining a first modification of the operation of the aerosol generation device 1. In the operation shown in Fig. 9, the heating of the second load 31 is continued also in the aerosol generation period, which is different from Fig. 8. The operation from power ON to the start of the aerosol generation request is the same as in Fig. 8.

When the aerosol generation request is issued ("aerosol generation request start" in Fig. 9), the switch SW2 and the switch SW3 are turned off, and the connection node N3 and the connection node N1 are connected by the switching element SW4. In this state, control of the switch SW1 is started, and the first load 21 is heated for aerosol generation. During the heating period of the first load 21, the switch SW2 is turned on, and the heating of the second load 31 is started so as to converge the flavor source 33 to the target temperature. When the second control period elapses since the start of the heating of the first load 21, the switch SW1 is turned off, and the switch SW3 is turned on during the period when the switch SW1 is turned off. As a result, the temperature of the first load 21 is detected.

After the temperature of the first load 21 is detected, the switch SW3 is turned off. Thereafter, when the first control period elapses since the start of the heating of the second load 31, the switch SW2 is turned off, and in a period when the switch SW2 is turned off, the connection node N3 and the connection node N2 are connected by the switching element SW4, and further, the switch SW3 is turned on. As a result, the temperature of the second load 31 is detected. After the temperature of the second load 31 is detected, the switch SW3 is turned off, and the connection node N3 and the connection node N1 are connected by the switching element SW4. Thereafter, the same operation as in a period Tx is repeated.

Then, when the aerosol generation request is ended (aerosol generation request end in Fig. 9), the connection node N3 and the connection node N2 are connected by the switching element SW4, and thereafter, the flavor source heating period, in which the heating of the second load 31 and the temperature detection of the second load 31 are alternately performed, is started.

In the operation of the first modification described above, the heating and the temperature detection of the second load 31 are continued during the aerosol generation period in which the heating and the temperature detection of the first load 21 are performed. Therefore, even if the temperature of the flavor source 33 does not reach the target temperature when the aerosol generation request is started, the temperature of the flavor source 33 can reach the target temperature during the aerosol generation period. As a result, a stable flavor can be achieved. Further, according to the operation of the first modification, the first load 21 and the second load 31 can be simultaneously heated during the aerosol generation period. Therefore, aerosol having a desired flavor can be efficiently generated. In addition, since the temperature of the first load 21 is detected during the heating of the second load 31, the temperature of the first load 21 can be controlled with high accuracy by using the temperature of the first load 21, and a stable amount of aerosol can be generated.

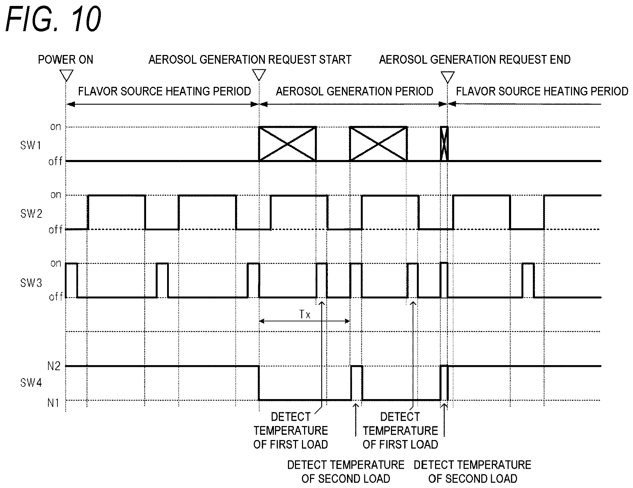

Although temperature detection timing of the second load 31 is set to a period when both the first load 21 and the second load 31 are not heated during the aerosol generation period in the example shown in Fig. 9, the present invention is not limited thereto. For example, as shown in Fig. 10, the temperature of the second load 31 may be detected during a period when the heating of the second load 31 is not performed while the heating of the first load 21 is performed during the aerosol generation period. In this way, a period of heating control of each of the first load 21 and the second load 31 can be shortened, and aerosol having a desired flavor can be efficiently generated.

(Second Modification of Operation of Aerosol generation device)

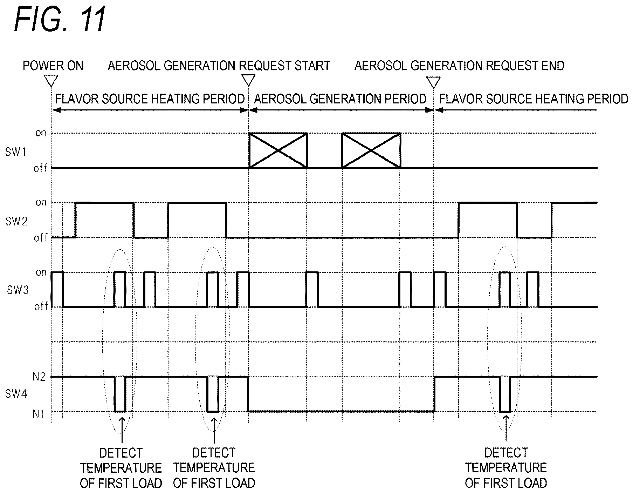

Fig. 11 is a timing chart for explaining a second modification of the operation of the aerosol generation device 1. In the operation shown in Fig. 11, the temperature of the first load 21 is detected also in the flavor source heating period, which is different from Fig. 8. Specifically, Fig. 11 is different from Fig. 8 only in a portion surrounded by an elliptical broken line.

That is, in the flavor source heating period, during the period when the second load 31 is heated, the connection node N3 and the connection node N1 are connected by the switching element SW4, and further, the switch SW3 is turned on. As a result, the voltage applied to the first load 21 is input to the operational amplifier OP1, and the temperature of the first load 21 is detected based on the output of the ADC 50b. After the temperature of the first load 21 is detected, the connection node N3 and the connection node N2 are connected by the switching element SW4, and further, the switch SW3 is turned off.

In the operation of the second modification described above, since the temperature of the first load 21 is detected in the flavor source heating period, it is possible to manage the temperature of the first load 21 before the aerosol generation. In this way, since the temperature of the first load 21 can be controlled before the aerosol generation, it is possible to prevent overheating of the first load 21 and to generate an appropriate amount of aerosol.

In the operation of the second modification, an execution interval of a temperature detection process of the first load 21 in the flavor source heating period is preferably longer than an execution interval of a temperature detection process of the second load 31 in the flavor source heating period. In the flavor source heating period, since it is necessary to cause the flavor source 33 to reach the target temperature, it is desirable to detect the temperature of the second load 31 at a high frequency. On the other hand, since the temperature of the first load 21 is detected for temperature management of the first load 21, there is no problem even if the temperature of the first load 21 is detected at a low frequency. In this way, by reducing the frequency of the temperature detection of the first load 21 in the flavor source heating period, power consumption can be reduced.

(Modification of Internal Configuration of Power Supply Unit)

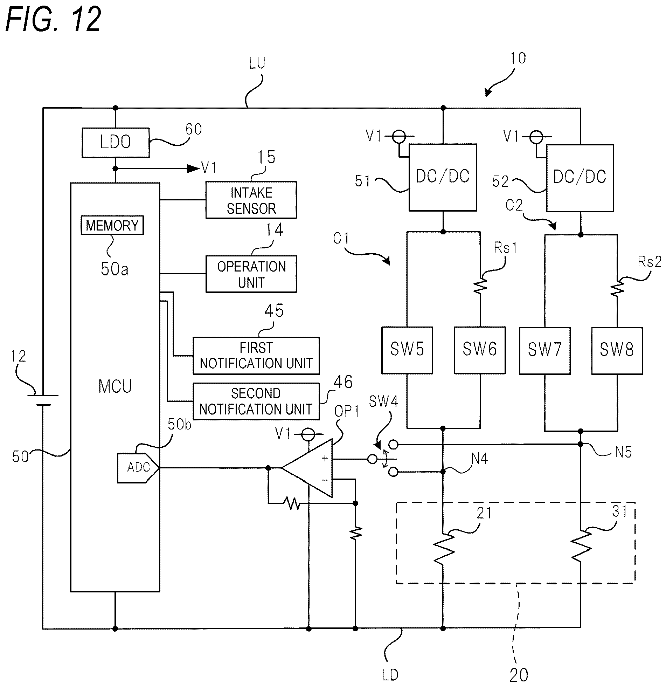

Fig. 12 is a schematic view showing a modification of an internal configuration of the power supply unit shown in Fig. 5. The power supply unit 10 shown in Fig. 12 has a configuration in which the switches SW1 to SW3 and the resistance element Rs are omitted, and a parallel circuit C1 and a parallel circuit C2 are added instead.

The parallel circuit C1 is connected to output of the DC/DC converter 51. In the parallel circuit C1, a switch SW5 and a series circuit formed of a resistance element Rs1 and a switch SW6 are connected in parallel. The resistance element Rs1 is a circuit element configured to detect the temperature of the first load 21, and has a predetermined electric resistance value similarly to the resistance element Rs. Output of the parallel circuit C1 and the first load 21 are connected to each other at a connection node N4.

The parallel circuit C2 is connected to output of the DC/DC converter 52. In the parallel circuit C2, a switch SW7 and a series circuit formed of a resistance element Rs2 and a switch SW8 are connected in parallel. The resistance element Rs2 is a circuit element configured to detect the temperature of the second load 31, and has a predetermined electric resistance value similarly to the resistance element Rs. Output of the parallel circuit C2 and the second load 31 are connected to each other at a connection node N5.

The switching element SW4 switches between a state where the non-inverting input terminal of the operational amplifier OP1 is connected to the connection node N4 and a state where the non-inverting input terminal of the operational amplifier OP1 is connected to the connection node N5.

In the power supply unit 10 shown in Fig. 12, the first load 21 can be heated by performing control to turn on the switch SW5 and turn off the switch SW6 in a state where the switching element SW4 is connected to the connection node N4. In addition, the temperature of the first load 21 can be detected by performing control to turn off the switch SW5 and turn on the switch SW6 in the state where the switching element SW4 is connected to the connection node N4. During the heating and the temperature detection of the first load 21, the second load 31 can be heated by performing control to turn on the switch SW7 and turn off the switch SW8. Even during the heating of the first load 21, the temperature of the second load 31 can be detected by connecting the switching element SW4 to the connection node N5, and performing control to turn off the switch SW7 and turn on the switch SW8.

In addition, the second load 31 can be heated by performing control to turn on the switch SW7 and turn off the switch SW8 in a state where the switching element SW4 is connected to the connection node N5. In addition, the temperature of the second load 31 can be detected by performing control to turn off the switch SW7 and turn on the switch SW8 in the state where the switching element SW4 is connected to the connection node N5. During the heating and the temperature detection of the second load 31, the first load 21 can be heated by performing control to turn on the switch SW5 and turn off the switch SW6. Even during the heating of the second load 31, the temperature of the first load 21 can be detected by connecting the switching element SW4 to the connection node N4, and performing control to turn off the switch SW5 and turn on the switch SW6.

According to the configuration of Fig. 12, the resistance element Rs1 for temperature detection of the first load 21 and the resistance element Rs2 for temperature detection of the second load 31 are separately provided. Therefore, even when temperature-resistance-value characteristics are greatly different between the first load 21 and the second load 31, the electric resistance values of the resistance elements can be designed in accordance with the characteristics, and the temperature detection can be easily performed. In addition, in the configuration of Fig. 12, when the temperature of the first load 21 is detected, the DC/DC converter 51 does not boost the voltage, so that the output voltage V1 can be supplied to the series circuit formed of the resistance element Rs1 and the first load 21. Similarly, when the temperature of the second load 31 is detected, the DC/DC converter 52 does not boost the voltage, so that the output voltage V1 can be supplied to the series circuit formed of the resistance element Rs2 and the second load 31. As a result, the output range of the operational amplifier OP1 can be fully utilized, so that the temperature detection accuracy can be improved.

In the aerosol generation device 1 described so far, the target temperature of the flavor source 33 is set based on the number of times of inhalation or the cumulative discharging time. As described above, the number of times of inhalation or the cumulative discharging time is a parameter inversely proportional to the remaining amount of the flavor component included in the flavor source 33. Therefore, the flavor component remaining amount of the flavor source 33 may be derived by calculation based on a parameter such as an amount of power supplied to the first load 21 for aerosol generation, and the target temperature of the flavor source 33 may be set based on the flavor component remaining amount.

In the aerosol generation device 1, temperatures of two objects to be heated, namely the first load 21 that heats the aerosol source 22 and the second load 31 that heats the flavor source 33, are detected by the single operational amplifier. However, the present invention can be applied to a power supply unit of an aerosol generation device including a power supply capable of discharging electricity to a load that heats each of a plurality of objects to be heated and has a correlation between an electric resistance value and a temperature.

For example, when an aerosol generation device including two aerosol sources and loads for heating the respective aerosol sources is assumed, a circuit for detecting temperatures of the two loads may have the same configuration as the above-described circuit for detecting the temperatures of the first load 21 and the second load 31. Alternatively, when an aerosol generation device including two flavor sources and loads for heating the respective flavor sources is assumed, a circuit for detecting temperatures of the two loads may have the same configuration as the above-described circuit for detecting the temperatures of the first load 21 and the second load 31. Alternatively, when an aerosol generation device including one aerosol source but a plurality of loads for heating the aerosol source is assumed, a circuit for detecting temperatures of the two loads may have the same configuration as the above-described circuit for detecting the temperatures of the first load 21 and the second load 31.

In the present specification, at least the following matters are described. Although corresponding constituent elements or the like in the above-described embodiment are shown in parentheses, the present invention is not limited thereto.

**Claims**

1. A power supply unit (10) for an aerosol generation device (1), the power supply unit (10) comprising:

   a first load (21) configured to heat an aerosol source (22) and has a correlation between a temperature and an electric resistance value;
   a second load (31) configured to heat a flavor source (33) configured to add a flavor component to aerosol generated from the aerosol source (22) and has a correlation between a temperature and an electric resistance value;
   a power supply (12) configured to discharge electricity to the first load (21) and the second load (31);
   a circuit element (Rs1, Rs2) that has a predetermined electric resistance value;
   a switching element (SW4, SW6, SW8) configured to be switchable between a first state where the circuit element (Rs1, Rs2) and the first load (21) are connected in series and a second state where the circuit element (Rs1, Rs2) and the second load (31) are connected in series;
   an operational amplifier (OP1) to which a voltage applied to the first load (21) in a first series circuit formed of the circuit element (Rs1, Rs2) and the first load (21) in the first state is input, and to which a voltage applied to the second load (31) in a second series circuit formed of the circuit element (Rs1, Rs2) and the second load (31) in the second state is input; and

   a processing device (50) configured to detect a temperature of each of the first load (21) and the second load (31) based on output of the operational amplifier (OP1), wherein the processing device (50) is configured to control the switching element (SW4, SW6, SW8) such that a temperature detection process of the first load (21) based on the output of the operational amplifier (OP1) and a temperature detection process of the second load (31) based on the output of the operational amplifier (OP1) are performed in different periods.

2. The power supply unit (10) for an aerosol generation device (1) according to claim 1, wherein:

   the circuit element (Rs1, Rs2) is shared by the first series circuit and the second series circuit;
   the switching element (SW4, SW6, SW8) is connected between each of the first load (21) and the second load (31) and the circuit element (Rs1, Rs2); and
   an input terminal of the operational amplifier (OP1) is connected to a connection node between the switching element (SW4, SW6, SW8) and the circuit element (Rs1, Rs2).

3. The power supply unit (10) for an aerosol generation device (1) according to claim 2, wherein a voltage input (V1) to each of the first series circuit and the second series circuit has a same value as a power supply voltage (V1) of the operational amplifier (OP1).

4. The power supply unit (10) for an aerosol generation device (1) according to claim 2 or 3, further comprising:

   a first switching element (SW1) that is connected in series to the first load (21) and, when being conducted, allows discharging from the power supply (12) to the first load (21) for heating; and
   a second switching element (SW2) that is connected in series to the second load (31) and, when being conducted, allows discharging from the power supply (12) to the second load (31) for heating, wherein
   the switching element (SW4, SW6, SW8) is connected to each of a connection node (N1) between the first load (21) and the first switching element (SW1) and a connection node (N2) between the second load (31) and the second switching element (SW2).

5. The power supply unit (10) for an aerosol generation device (1) according to claim 4, wherein:

   when an aerosol generation request is received, the processing device (50) is configured to control the first switching element (SW1) to start heating of the first load (21); and
during a period when the heating of the first load (21) is performed, the processing device (50) is configured to perform the temperature detection process of the second load (31).

6. The power supply unit (10) for an aerosol generation device (1) according to claim 5, wherein
while the generation request is received, the processing device (50) is configured to perform heating control of controlling the second switching element (SW2) so as to heat the second load (31), and, during a period when the heating control is performed, the processing device (50) is configured to perform the temperature detection process of the first load (21).

7. The power supply unit (10) for an aerosol generation device (1) according to claim 4, wherein:

before an aerosol generation request is received, the processing device (50) is configured to perform the temperature detection process of the second load (31) and heating control of controlling the second switching element (SW2) so as to heat the second load (31); and
during a period when the heating control of the second load (31) is performed, the processing device (50) is configured to perform the temperature detection process of the first load (21).

8. The power supply unit (10) for an aerosol generation device (1) according to claim 7, wherein
an execution interval of the temperature detection process of the first load (21) performed before the generation request is received is longer than an execution interval of the temperature detection process of the second load (31) performed before the generation request is received.

**Patentansprüche**

1. Stromversorgungseinheit (10) für eine Aerosolerzeugungsvorrichtung (1), wobei die Stromversorgungseinheit (10) umfasst:

eine erste Last (21), die konfiguriert ist, um eine Aerosolquelle (22) zu erwärmen, und eine Korrelation zwischen einer Temperatur und einem elektrischen Widerstandswert aufweist;
eine zweite Last (31), die konfiguriert ist, um eine Aromaquelle (33) zu erwärmen, die konfiguriert ist, um eine Aromakomponente zum Aerosol hinzuzufügen, das aus der Aerosolquelle (22) erzeugt wird, und eine Korrelation zwischen einer Temperatur und einem elektrischen Widerstandswert aufweist;
eine Stromversorgung (12), die konfiguriert ist, um Elektrizität zu der ersten Last (21) und der zweiten Last (31) abzuleiten;
ein Kreislaufelement (Rs1, Rs2), das einen vorbestimmten elektrischen Widerstandswert aufweist;
ein Schaltelement (SW4, SW6, SW8), das konfiguriert ist, um zwischen einem ersten Zustand, in dem das Kreislaufelement (Rs1, Rs2) und die erste Last (21) in Reihe verbunden sind, und einem zweiten Zustand, in dem das Kreislaufelement (Rs1, Rs2) und die zweite Last (31) in Reihe verbunden sind, schaltbar zu sein;
einen Betriebsverstärker (OP1), in den eine Spannung, die an die erste Last (21) in einem Kreislauf einer ersten Reihe, die aus dem Kreislaufelement (Rs1, Rs2) und der ersten Last (21) gebildet wird, im ersten Zustand angelegt wird, eingegeben wird, und in den eine Spannung, die an die zweite Last (31) in einem Kreislauf einer zweiten Reihe, die aus dem Kreislaufelement (Rs1, Rs2) und der zweiten Last (31) gebildet wird, im zweiten Zustand angelegt wird, eingegeben wird; und
eine Verarbeitungsvorrichtung (50), die konfiguriert ist, um eine Temperatur einer jeden von der ersten Last (21) und der zweiten Last (31) basierend auf der Ausgabe des Betriebsverstärkers (OP1) zu erkennen, wobei
die Verarbeitungsvorrichtung (50) konfiguriert ist, um das Schaltelement (SW4, SW6, SW8) zu steuern, sodass ein Temperaturerkennungsprozess der ersten Last (21) basierend auf der Ausgabe des Betriebsverstärkers (OP1) und ein Temperaturerkennungsprozess der zweiten Last (31) basierend auf der Ausgabe des Betriebsverstärkers (OP1) in unterschiedlichen Zeiträumen ausgeführt werden.

2. Stromversorgungseinheit (10) für eine Aerosolerzeugungsvorrichtung (1) nach Anspruch 1, wobei:

das Kreislaufelement (Rs1, Rs2) vom Kreislauf der ersten Reihe und dem Kreislauf der zweiten Reihe gemeinsam genutzt wird;
das Schaltelement (SW4, SW6, SW8) zwischen jeder von der ersten Last (21) und der zweiten Last (31) und dem Kreislaufelement (Rs1, Rs2) verbunden ist; und
ein Eingabeanschluss des Betriebsverstärkers (OP1) mit einem Verbindungsknoten zwischen dem Schaltelement (SW4, SW6, SW8) und dem Kreislaufelement (Rs1, Rs2) verbunden ist.

3. Stromversorgungseinheit (10) für eine Aerosolerzeugungsvorrichtung (1) nach Anspruch 2, wobei

eine Spannungseingabe (V1) in jeden von dem Kreislauf der ersten Reihe und dem Kreislauf der zweiten Reihe einen gleichen Wert wie eine Stromversorgungsspannung (V1) des Betriebsverstärkers (OP1) aufweist.

4. Stromversorgungseinheit (10) für eine Aerosolerzeugungsvorrichtung (1) nach Anspruch 2 oder 3, weiter umfassend:

> ein erstes Schaltelement (SW1), das in Reihe mit der ersten Last (21) verbunden ist, und, wenn es ausgeführt wird, das Ableiten aus der Stromversorgung (12) zur ersten Last (21) zum Erwärmen erlaubt; und
> ein zweites Schaltelement (SW2), das in Reihe mit der zweiten Last (31) verbunden ist und, wenn es ausgeführt wird, das Ableiten aus der Stromversorgung (12) zur zweiten Last (31) zum Erwärmen erlaubt, wobei
> das Schaltelement (SW4, SW6, SW8) mit jedem von einem Verbindungsknoten (N1) zwischen der ersten Last (21) und dem ersten Schaltelement (SW1) und einem Verbindungsknoten (N2) zwischen der zweiten Last (31) und dem zweiten Schaltelement (SW2) verbunden ist.

5. Stromversorgungseinheit (10) für eine Aerosolerzeugungsvorrichtung (1) nach Anspruch 4, wobei:

> wenn eine Aerosolerzeugungsanforderung empfangen wird, die Verarbeitungsvorrichtung (50) konfiguriert ist, um das erste Schaltelement (SW1) zu steuern, um das Erwärmen der ersten Last (21) zu starten; und
> während eines Zeitraumes, wenn das Erwärmen der ersten Last (21) ausgeführt wird, die Verarbeitungsvorrichtung (50) konfiguriert ist, um den Temperaturerkennungsprozess der zweiten Last (31) auszuführen.

6. Stromversorgungseinheit (10) für eine Aerosolerzeugungsvorrichtung (1) nach Anspruch 5, wobei während die Erzeugungsanforderung empfangen wird, die Verarbeitungsvorrichtung (50) konfiguriert ist, um eine Erwärmungssteuerung zum Steuern des zweiten Schaltelements (SW2) auszuführen, um die zweite Last (31) zu erwärmen, und, während eines Zeitraumes, wenn die Erwärmungssteuerung ausgeführt wird, die Verarbeitungsvorrichtung (50) konfiguriert ist, um den Temperaturerkennungsprozess der ersten Last (21) auszuführen.

7. Stromversorgungseinheit (10) für eine Aerosolerzeugungsvorrichtung (1) nach Anspruch 4, wobei:

> bevor eine Aerosolerzeugungsanforderung empfangen wird, die Verarbeitungsvorrichtung (50) konfiguriert ist, um den Temperaturerkennungsprozess der zweiten Last (31) und die Erwärmungssteuerung zum Steuern des zweiten Schaltelements (SW2) auszuführen, um die zweite Last (31) zu erwärmen; und
> während eines Zeitraums, wenn die Erwärmungssteuerung der zweiten Last (31) ausgeführt wird, die Verarbeitungsvorrichtung (50) konfiguriert ist, um den Temperaturerkennungsprozess der ersten Last (21) auszuführen.

8. Stromversorgungseinheit (10) für eine Aerosolerzeugungsvorrichtung (1) nach Anspruch 7, wobei ein Umsetzungsintervall des Temperaturerkennungsprozesses der ersten Last (21), der ausgeführt wird, bevor die Erzeugungsanforderung empfangen wird, länger als ein Umsetzungsintervall des Temperaturerkennungsprozesses der zweiten Last (31) ist, der ausgeführt wird, bevor die Erzeugungsanforderung empfangen wird.

**Revendications**

1. Unité d'alimentation électrique (10) pour un dispositif de génération d'aérosol (1), l'unité d'alimentation électrique (10) comprenant :

> une première charge (21) configurée pour chauffer une source d'aérosol (22) et qui présente une corrélation entre une température et une valeur de résistance électrique ;
> une seconde charge (31) configurée pour chauffer une source d'arôme (33) configurée pour ajouter une composante d'arôme à l'aérosol généré à partir de la source d'aérosol (22) et qui présente une corrélation entre une température et une valeur de résistance électrique ;
> une alimentation électrique (12) configurée pour décharger de l'électricité vers la première charge (21) et la seconde charge (31) ;
> un élément de circuit (Rs1, Rs2) qui présente une valeur de résistance électrique prédéterminée ;
> un élément de commutation (SW4, SW6, SW8) configuré pour être commutable entre un premier état dans lequel l'élément de circuit (Rs1, Rs2) et la première charge (21) sont connectés en série et un second état dans lequel l'élément de circuit (Rs1, Rs2) et la seconde charge (31) sont connectés en série ;
> un amplificateur opérationnel (OP1) qui reçoit en entrée une tension appliquée à la première charge (21) dans un premier circuit en série formé de l'élément de circuit (Rs1, Rs2) et de la première charge (21) dans le premier état, et qui reçoit en entrée une tension appliquée à la seconde charge (31) dans un second circuit en série formée de l'élément de circuit (Rs1, Rs2) et de la seconde charge (31) dans le second état ; et

un dispositif de traitement (50) configuré pour détecter une température de chacune de la première charge (21) et de la seconde charge (31) sur la base d'une sortie de l'amplificateur opérationnel (OP1), dans laquelle

le dispositif de traitement (50) est configuré pour commander l'élément de commutation (SW4, SW6, SW8) de telle sorte qu'un processus de détection de température de la première charge (21) sur la base de la sortie de l'amplificateur opérationnel (OP1) et un processus de détection de température de la seconde charge (31) sur la base de la sortie de l'amplificateur opérationnel (OP1) sont exécutés à différentes périodes.

2. Unité d'alimentation électrique (10) pour un dispositif de génération d'aérosol (1) selon la revendication 1, dans laquelle :

l'élément de circuit (Rs1, Rs2) est partagé par le premier circuit en série et le second circuit en série ;
l'élément de commutation (SW4, SW6, SW8) est connecté entre chacune de la première charge (21) et de la seconde charge (31) et l'élément de circuit (Rs1, Rs2) ; et
une borne d'entrée de l'amplificateur opérationnel (OP1) est connectée à un noeud de connexion entre l'élément de commutation (SW4, SW6, SW8) et l'élément de circuit (Rs1, Rs2).

3. Unité d'alimentation électrique (10) pour un dispositif de génération d'aérosol (1) selon la revendication 2, dans laquelle
une entrée de tension (V1) vers chacun du premier circuit en série et du second circuit en série présente une valeur identique à la tension d'alimentation électrique (V1) de l'amplificateur opérationnel (OP1).

4. Unité d'alimentation électrique (10) pour un dispositif de génération d'aérosol (1) selon la revendication 2 ou 3, comprenant en outre :

un premier élément de commutation (SW1) qui est connecté en série à la première charge (21) et permet, lorsqu'il est à l'état passant, de décharger de l'électricité depuis l'alimentation électrique (12) vers la première charge (21) pour chauffer ; et
un second élément de commutation (SW2) qui est connecté en série à la seconde charge (31) et permet, lorsqu'il est à l'état passant, de décharger de l'électricité depuis l'alimentation électrique (12) vers la seconde charge (31) pour chauffer ; dans laquelle
l'élément de commutation (SW4, SW6, SW8) est connecté à chacun d'un noeud de connexion (N1) entre la première charge (21) et le premier élément de commutation (SW1) et d'un noeud de connexion (N2) entre la seconde charge (31) et le second élément de commutation (SW2).

5. Unité d'alimentation électrique (10) pour un dispositif de génération d'aérosol (1) selon la revendication 4, dans laquelle :

lorsqu'une demande de génération d'aérosol est reçue, le dispositif de traitement (50) est configuré pour commander le premier élément de commutation (SW1) pour commencer à chauffer la première charge (21) ; et
pendant une période où le chauffage de la première charge (21) est effectué, le dispositif de traitement (50) est configuré pour exécuter le processus de détection de température de la seconde charge (31).

6. Unité d'alimentation électrique (10) pour un dispositif de génération d'aérosol (1) selon la revendication 5, dans laquelle
pendant que la demande de génération est reçue, le dispositif de traitement (50) est configuré pour exécuter une commande de chauffage consistant à commander le second élément de commutation (SW2) de façon à chauffer la seconde charge (31), et, pendant une période où la commande de chauffage est exécutée, le dispositif de traitement (50) est configuré pour exécuter le processus de détection de température de la première charge (21).

7. Unité d'alimentation électrique (10) pour un dispositif de génération d'aérosol (1) selon la revendication 4, dans laquelle :

avant qu'une demande de génération d'aérosol soit reçue, le dispositif de traitement (50) est configuré pour exécuter le processus de détection de température de la seconde charge (31) et la commande de chauffage consistant à commander le second élément de commutation (SW2) de façon à chauffer la seconde charge (31) ; et
pendant une période où la commande de chauffage de la seconde charge (31) est exécutée, le dispositif de traitement (50) est configuré pour exécuter le processus de détection de température de la première charge (21).

8. Unité d'alimentation électrique (10) pour un dispositif de génération d'aérosol (1) selon la revendication 7, dans laquelle
un intervalle d'exécution du processus de détection de température de la première charge (21) exécuté avant que la demande de génération soit reçue est plus long qu'un intervalle d'exécution du processus de détection de température de la seconde charge (31) exécuté avant que la demande de génération soit reçue.

FIG. 1

FIG. 2

*FIG. 3*

EP 3 979 456 B1

FIG. 4

20

## FIG. 5

## FIG. 6

START

S30

POWER SUPPLY TURNED ON? — NO

B ⟶ YES

S31

DETERMINE TARGET TEMPERATURE $T_{cap\_target}$ OF FLAVOR SOURCE BASED ON NUMBER OF TIMES OF INHALATION OR CUMULATIVE DISCHARGING TIME

ACQUIRE TEMPERATURE $T_{cap\_sense}$ OF FLAVOR SOURCE — S32

CONTROL DISCHARGING TO SECOND LOAD BASED ON $T_{cap\_sense}$ and $T_{cap\_target}$ — S33

S34

AEROSOL GENERATION REQUEST DETECTED? — NO

YES

S35

REQUEST NOT DETECTED WITHIN PREDETERMINED TIME? — NO

YES — S36

END DISCHARGING TO SECOND LOAD

SHIFT TO SLEEP MODE — S37

STOP HEATING OF SECOND LOAD — S40

SUPPLY ATOMIZATION POWER $P_{liquid}$ TO FIRST LOAD — S41

A

*FIG. 7*

(A)

S43 DURATION TIME OF GENERATION REQUEST < UPPER LIMIT VALUE? — NO (loop)

YES

S42 AEROSOL GENERATION REQUEST ENDED? — NO

YES

STOP HEATING OF FIRST LOAD — S44

ACQUIRE SUPPLY TIME $t_{sense}$ OF ATOMIZATION POWER TO FIRST LOAD — S45

UPDATE NUMBER OF TIMES OF INHALATION OR CUMULATIVE DISCHARGING TIME — S46

S47 NUMBER OF TIMES OF INHALATION OR CUMULATIVE DISCHARGING TIME EXCEEDS THRESHOLD VALUE? — NO

YES

NOTIFY REPLACEMENT OF SECOND CARTRIDGE — S48

RESET NUMBER OF TIMES OF INHALATION OR CUMULATIVE DISCHARGING TIME, INITIALIZE SETTING OF TARGET TEMPERATURE $T_{cap\_target}$ — S49

S50 POWER SUPPLY TURNED OFF? — NO → (B)

YES

END

EP 3 979 456 B1

# FIG. 8

POWER ON     AEROSOL GENERATION REQUEST START     AEROSOL GENERATION REQUEST END

FLAVOR SOURCE HEATING PERIOD   AEROSOL GENERATION PERIOD   FLAVOR SOURCE HEATING PERIOD

SW1

SW2

SW3

SW4

DETECT TEMPERATURE OF SECOND LOAD   DETECT TEMPERATURE OF SECOND LOAD   DETECT TEMPERATURE OF SECOND LOAD   DETECT TEMPERATURE OF FIRST LOAD   DETECT TEMPERATURE OF FIRST LOAD   DETECT TEMPERATURE OF SECOND LOAD   DETECT TEMPERATURE OF SECOND LOAD

EP 3 979 456 B1

# FIG. 9

POWER ON — AEROSOL GENERATION REQUEST START — AEROSOL GENERATION REQUEST END

FLAVOR SOURCE HEATING PERIOD | AEROSOL GENERATION PERIOD | FLAVOR SOURCE HEATING PERIOD

SW1 — on / off

SW2 — on / off

SW3 — on / off

SW4 — N2 / N1

Tx

DETECT TEMPERATURE OF FIRST LOAD

DETECT TEMPERATURE OF FIRST LOAD

DETECT TEMPERATURE OF SECOND LOAD    DETECT TEMPERATURE OF SECOND LOAD

## FIG. 10

## FIG. 11

## FIG. 12

**EP 3 979 456 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017511703 T
- WO 2019017654 A
- JP 6667708 B
- EP 3872952 A1